# EUROPEAN PATENT APPLICATION

(11) **EP 2 565 743 A2**
(43) Date of publication of application: **06.03.2013**
(21) Application number: 12182238.1
(22) Date of filing: 29.08.2012
(51) Int. Cl.: G06F 1/16, G09G 5/00

(54) **Display device and television device**

(30) Priority: 30.08.2011 JP 2011187151
(71) Applicant: Funai Electric Co., Ltd., Daito-shi Osaka 574-0013 (JP)
(72) Inventor: Kita, Yuki, Daito-shi, Osaka 574-0013 (JP); Fujikawa, Akihiro, Daito-shi, Osaka 574-0013 (JP); Yokawa, Akira, Daito-shi, Osaka 574-0013 (JP)
(74) Representative: Grünecker, Kinkeldey, Stockmair & Schwanhäusser

(57) **Abstract**

A display device that decreases the number of parts for a member that attaches a stand member and a speaker, includes a display device main body that includes a display panel, a stand member that supports the display device main body, a speaker provided on the display device main body, and a speaker/stand attachment member which is provided on the display device main body and in which a speaker attachment portion that attaches the speaker and a stand attachment portion that attaches the stand member are integral with each other.

## Description

### BACKGROUND OF THE INVENTION

### 1. Field of the Invention

The present invention relates to a display device and a television device, and particularly to a display device and a television device including a stand member.

### 2. Description of the Related Art

Display devices and television devices including a stand member have been known in the past (for example, see Japanese Patent Application Laid-Open Publication No. 2007-334244).

Japanese Patent Application Laid-Open Publication No. 2007-334244 discloses a display device including a device main body that includes a display panel unit, a stand member that supports the display device main body, speakers provided on the display device main body, stays for attaching the stand member to the device main body, and speaker bracket members for attaching the speakers to the display device main body. In this display device, the stays for attaching the stand member are provided one each on the left and right of the device main body, and the speaker bracket members for attaching the speakers are provided one each on the left and right of the device main body.

However, the display device of Japanese Patent Application Laid-Open Publication No. 2007-334244 is provided with a plurality of stays for attaching a stand member and a plurality of speaker bracket members for attaching speakers, so there is a problem in that the number of parts ends up being increased.

### SUMMARY OF THE INVENTION

Preferred embodiments of the present invention provide a display device and a television device which prevent an increase in the number of parts and actually decrease the number of parts required to attach a stand member and a speaker.

A display device according to a first preferred embodiment of the present invention includes a display device main body that includes a display panel, a stand member that supports the display device main body, a speaker provided on the display device main body, and an attachment member which is provided on the display device main body and in which a speaker attachment portion that attaches the speaker and a stand attachment portion that attaches the stand member are integral with each other.

With the display device according to the first preferred embodiment of the present invention, by providing an attachment member which is provided on the display device main body and in which a speaker attachment portion that attaches the speaker and a stand attachment portion that attaches the stand member are integral with each other, a member that attaches the stand member and a member that attaches the speaker can be configured by a single attachment member, so it is possible to prevent an increase in the number of parts for a member that attaches the stand member and the speaker.

In the display device according to the first preferred embodiment of the present invention, it is preferable that the speaker include a first speaker and a second speaker, that the speaker attachment portion of the attachment member include a first speaker attachment portion that attaches the first speaker and a second speaker attachment portion that attaches the second speaker, and that the first speaker attachment portion and the second speaker attachment portion be integral with the stand attachment portion in a state of being disposed so as to sandwich the stand attachment portion. If such a configuration is adopted, the attachment member can be longer than if the stand attachment portion is formed as a single body, by the length corresponding to the first speaker attachment portion and the second speaker attachment portion that are disposed so as to sandwich the stand attachment portion, so it is possible to prevent the attachment member from being twisted. Consequently, the display device main body can be supported in a stable manner by the stand member attached to the attachment member. Furthermore, the attachment member can be positioned with respect to the display device main body in the periphery of the first speaker attachment portion and in the periphery of the second speaker attachment portion that are disposed so as to sandwich the stand attachment portion, so the positioning is possible at locations spaced far away from the stand attachment portion. This makes it possible to easily reduce errors in the inclination of the stand attachment portion with respect to the display device main body compared to the case of positioning in the periphery of the stand attachment portion.

In the display device according to the first preferred embodiment of the present invention, it is preferable that in addition to the speaker attachment portion and the stand attachment portion, the attachment member be integral with a power supply cord attachment portion that attaches the power supply cord. With such a configuration, there is no need to separately provide a member that attaches the power supply cord, so the number of parts can be reduced accordingly.

In this case, the attachment member is preferably provided with a power supply cord pull-out opening portion that enables pulling out of the power supply cord to the outside. If such a configuration is adopted, the power supply cord can be pulled out easily to the outside from the vicinity of the power supply cord attachment portion of the attachment member to which the power supply cord is attached.

In the display device according to the first preferred embodiment of the present invention, it is preferable that the display device further include a circuit board attached to the rear surface of the display panel, and that in addition to the speaker attachment portion and the stand attachment portion, the attachment member be also integral with a wiring attachment portion that attaches wiring to connect the circuit board and the speaker. With such a configuration, it is not necessary to separately provide a member that attaches the wiring to connect the circuit board and the speaker, so the number of parts can be reduced accordingly.

In the display device according to the first preferred embodiment of the present invention, it is preferable that the display device further include a circuit board attached to the rear surface of the display panel and a cover member that covers the circuit board attached to the rear surface of the display panel, and that the attachment member be disposed so as to configure a portion of the cover member. If such a configuration is adopted, the speaker can be covered by the cover member that covers the circuit board attached to the rear surface of the display panel, so there is no need to separately provide a member that covers the speaker. The number of parts can be reduced by this as well. Moreover, the speaker and the board can be connected easily on the inside of the cover member.

In the display device according to the first preferred embodiment of the present invention, the attachment member is preferably fixed to a member made of metal that is disposed on the rear surface of the display panel. With such a configuration, the stand member can be attached to the attachment member that is fixed to the member made of metal, which has a high mechanical strength, so the display device main body can be supported by the stand member in a more stable manner.

In the display device according to the first preferred embodiment of the present invention, the speaker attachment portion of the attachment member preferably includes a plurality of sound holes that output sound from the speaker in a vertically downward direction. If such a configuration is adopted, the speaker can be attached so as to be oriented in a vertically downward direction, so that the thickness of the display device in the forward-rearward direction can be reduced.

In the display device according to the first preferred embodiment of the present invention, the attachment member is preferably arranged such that at least the speaker attachment portion and the stand attachment portion are formed integrally by resin molding, for example, so as to form a unitary monolithic member. With such a configuration, weight reduction is possible compared to the case of forming the attachment member from metal. In addition, because the attachment member is electrically insulated by resin, elements requiring insulation such as a main power supply switch can be easily attached to the attachment member.

The television device according to a second preferred embodiment of the present invention includes a receiver that can receive a television broadcast, a display device main body including a display panel that can display a television broadcast, a stand member that supports the display device main body, a speaker provided on the display device main body, and an attachment member which is provided on the display device main body and in which a speaker attachment portion that attaches the speaker and a stand attachment portion that attaches the stand member are integral with each other.

With the television device according to the second preferred embodiment of the present invention, as was described above, by providing an attachment member which is provided on the display device main body and in which a speaker attachment portion that attaches the speaker and a stand attachment portion that attaches the stand member are integral with each other, a member that attaches the stand member and a member that attaches the speaker can be configured by a single attachment member, so it is possible to prevent an increase and actually decrease the number of parts required for a member that attaches the stand member and the speaker.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is an overall perspective view of the television device according to a preferred embodiment of the present invention as seen from the front.

FIG. 2 is an overall perspective view of the television device according to a preferred embodiment of the present invention as seen from the rear.

FIG. 3 is an exploded perspective view showing the overall configuration of the television device according to a preferred embodiment of the present invention.

FIG. 4 is a block diagram showing the configuration of the television device according to a preferred embodiment of the present invention.

FIG. 5 is a perspective view showing the configuration of the speaker/stand attachment member according to a preferred embodiment of the present invention.

FIG. 6 is a perspective view of a state in which speakers and a power supply cord are attached to the speaker/stand attachment member according to a preferred embodiment of the present invention.

FIG. 7 is a back view of the television device according to a preferred embodiment of the present invention in a state in which a cover member is attached.

FIG. 8 is a back view of the television device according to a preferred embodiment of the present invention in a state in which the cover member is removed.

FIG. 9 is a perspective view of a state prior to the attachment of the stand member according to a preferred embodiment of the present invention to the display device main body.

### DETAILED DESCRIPTION OF THE PREFERRED EMBODIMENTS

Preferred embodiments of the present invention will be described below based on the figures.

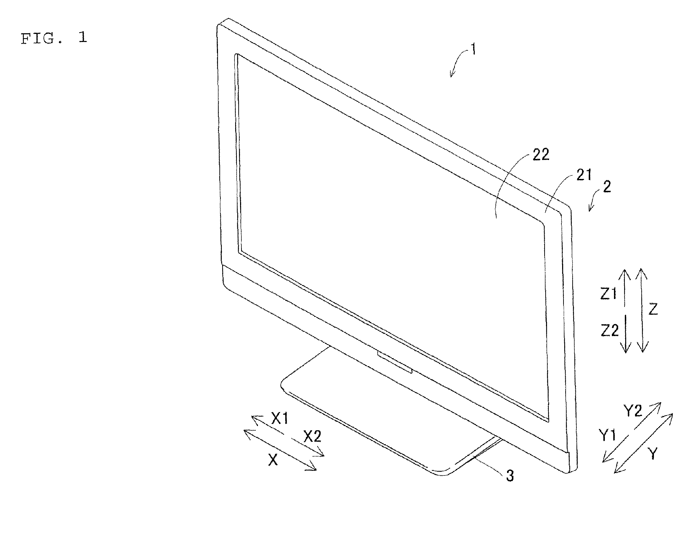

The configuration of the television device 1 according to a preferred embodiment of the present invention will be described with reference to FIGS. 1 through 9. Note that the television device 1 is one example of a "display device" according to a preferred embodiment of the present invention.

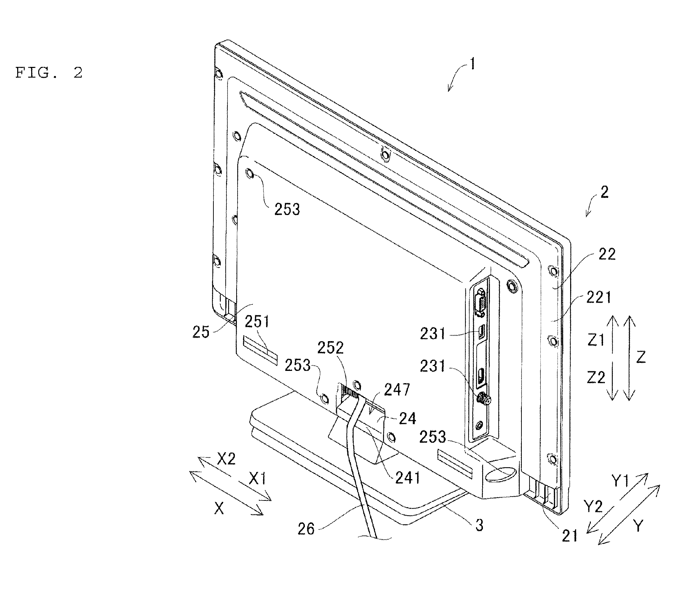

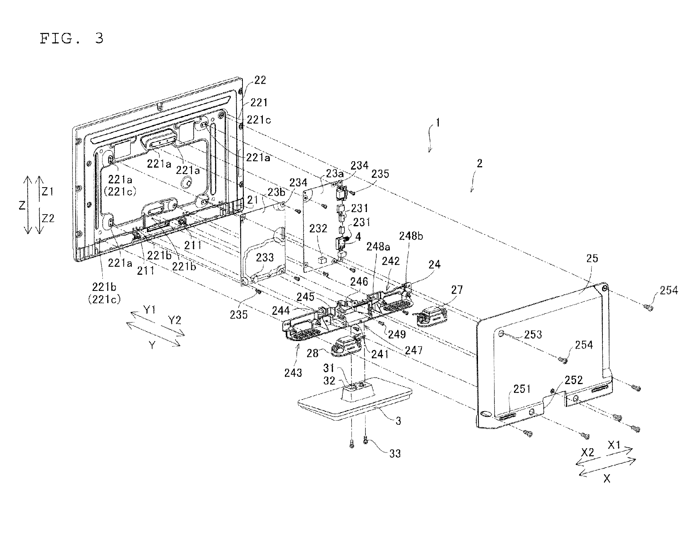

The television device 1 according to a preferred embodiment of the present invention includes a display device main body 2 and a stand member 3 as shown in FIGs. 1 and 2. Furthermore, as is shown in FIG. 3, the display device main body 2 includes a front cabinet 21, a display panel 22, circuit boards 23a and 23b, a speaker/stand attachment member 24, a cover member 25, a power supply cord 26 (see FIG. 2), and speakers 27 and 28. Note that the speaker/stand attachment member 24 is one example of an "attachment member" according to a preferred embodiment of the present invention. Moreover, the speakers 27 and 28 are examples of the "first speaker" and "second speaker," respectively according to a preferred embodiment of the present invention.

The front cabinet 21 preferably has a square or substantially square frame shape as viewed from the front surface as shown in FIG. 1. In addition, the front cabinet 21 is preferably made of a resin such as polystyrene, for example. Furthermore, the front cabinet 21 includes a front-side (Y1 direction-side) surface that is preferably subjected to glossy processing. Moreover, screw holes 211 to attach the speaker/stand attachment member 24 and the cover member 25 are provided in the rear surface of the front cabinet 21 as shown in FIG. 3.

The display panel 22 is disposed on the rear side (Y2 direction side) of the front cabinet 21 and fixed to the front cabinet 21. In addition, the display panel 22 is configured so as to display video of a television broadcast on the screen on the front side (Y1 direction side). Furthermore, the display panel 22 includes a rear frame 221 on the rear-side (Y2 direction-side) surface thereof. The rear frame 221 is preferably made of metal (made of sheet metal composed of SECC (electro-galvanized steel sheet), for example). Moreover, the rear frame 221 is provided with screw holes 221a to attach the circuit board 23a to perform signal processing and the circuit board 23b to generate power, screw holes 221b to attach the speaker/stand attachment member 24, and screw holes 221c to attach the cover member 25. Note that the rear frame 221 is one example of a "member made of metal" according to a preferred embodiment of the present invention.

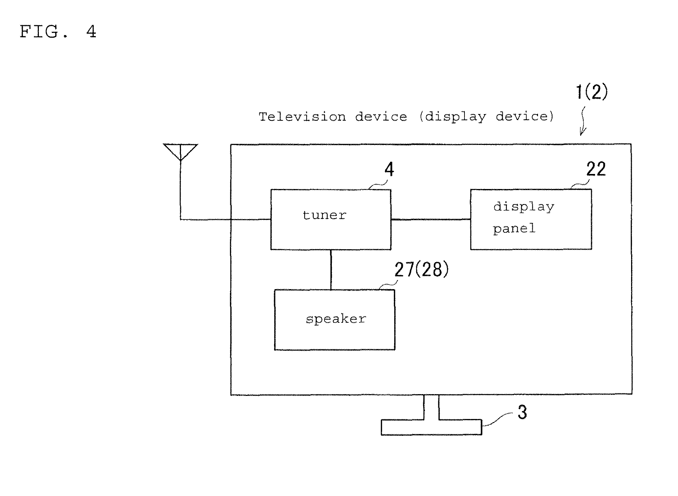

The circuit boards 23a and 23b are disposed on the rear side (Y2 direction side) of the display panel 22 and fixed to the rear frame 221 of the display panel 22. In addition, the circuit board 23a includes terminals 231 to input and output video, audio, and data, a speaker connection portion 232, and screw insertion holes 234. Furthermore, the circuit board 23b includes a power supply cord connection portion 233 and screw insertion holes 234. Moreover, the circuit boards 23a and 23b are attached preferably by screws 235 and 254 that are inserted into the screw holes 221a of the rear frame 221 via the screw insertion holes 234. In addition, the circuit boards 23a and 23b are each connected to the display panel 22 by wiring, which is not shown in the figures. The circuit boards 23a and 23b are also connected to each other by wiring, which is not shown in the figures. Furthermore, the circuit board 23a includes a receiver or tuner 4 (see FIGS. 3 and 4) which can receive a television broadcast.

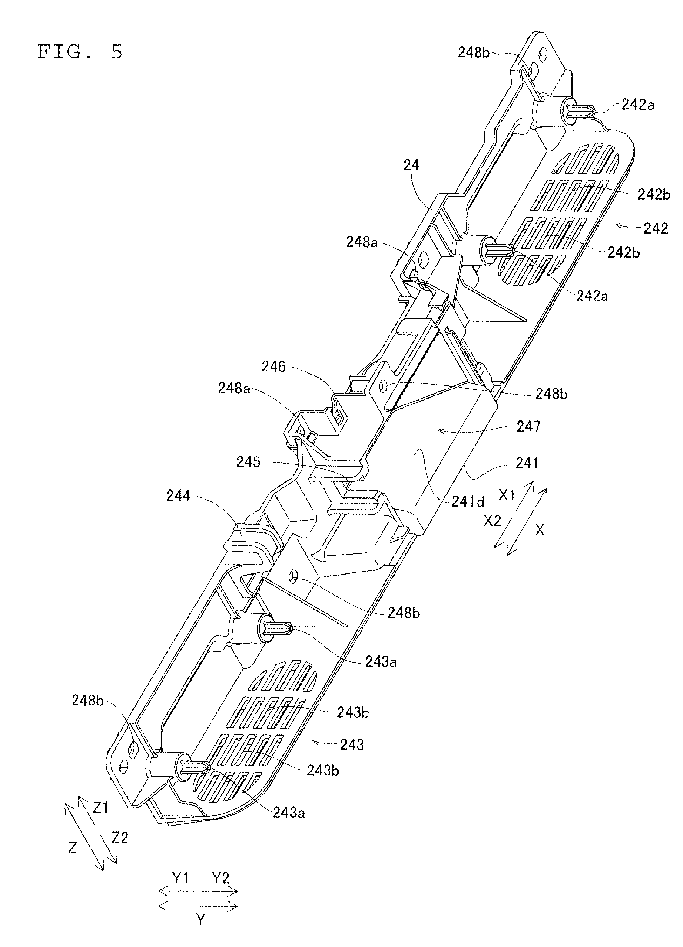

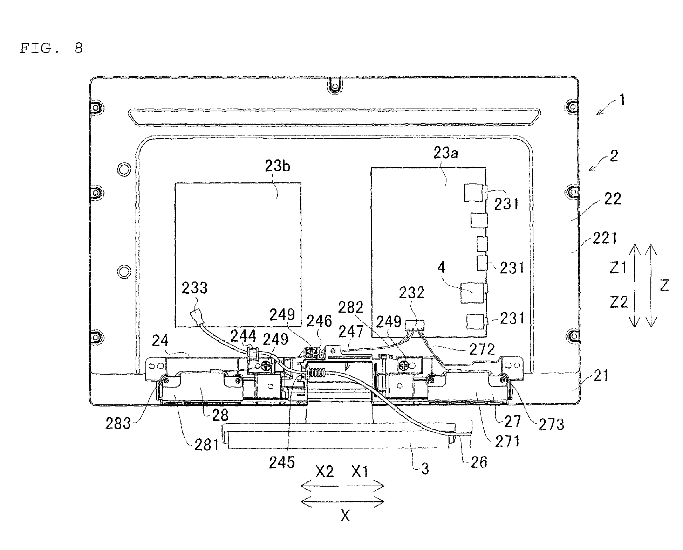

In the present preferred embodiment, as is shown in FIG. 8, the speaker/stand attachment member 24 is disposed on the rear side (Y2 direction-side) of the display panel 22 and fixed to the rear frame 221 of the display panel 22. Moreover, the speaker/stand attachment member 24 includes a stand attachment portion 241 and speaker attachment portions 242 and 243 as shown in FIG. 5. This speaker/stand attachment member 24 is further provided with a power supply cord attachment portion 244, a power supply cord pull-out opening portion 245, a wiring attachment portion 246, a recessed space 247, and screw insertion holes 248a and 248b. In addition, the speaker/stand attachment member 24 is preferably made of a resin such as polystyrene. Furthermore, the stand attachment portion 241, the speaker attachment portions 242 and 243, the power supply cord attachment portion 244, the power supply cord pull-out opening portion 245, and the wiring attachment portion 246 are preferably integrally formed with each other by resin molding, for example, so as to form a unitary monolithic member. Note that the speaker attachment portions 242 and 243 are examples of a "first speaker attachment portion" and "second speaker attachment portion," respectively, according to a preferred embodiment of the present invention.

Moreover, as is shown in FIG. 3, the speaker/stand attachment member 24 preferably has a standing wall shape that covers an area below (to the Z2 direction side of) the circuit boards 23a and 23b attached to the display panel 22. In addition, the speaker/stand attachment member 24 is attached by screws 249 that are inserted into the screw holes 221b of the rear frame 221 via the screw insertion holes 248a. Furthermore, the speaker/stand attachment member 24 is attached preferably by the screws 254 that are inserted into the screw holes 221b of the rear frame 221 and the screw holes 211 of the front cabinet 21 via the screw insertion holes 248b.

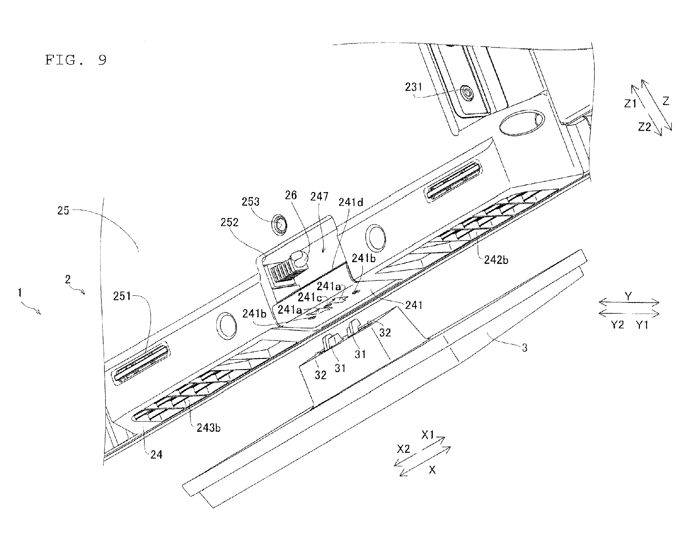

The stand attachment portion 241 is disposed on the underside (Z2 direction-side) surface of the speaker/stand attachment member 24 substantially in the center of the left-right direction (X direction). As is shown in FIG. 9, the stand attachment portion 241 includes hook engaging portions 241a, screw holes 241b and 241c, and an upper surface 241d. The hook engaging portions 241a are disposed along the left-right direction (X direction). Substantially rectangular holes with which protruding hook portions 31 (described later) of the stand member 3 engage are provided in the respective hook engaging portions 241a. A respective one of the screw holes 241b is disposed on the outside in the left-right direction so as to sandwich the two hook engaging portions 241a. The screw holes 241b are used to attach the stand member 3. One screw hole 241c is disposed substantially in the center of the two hook engaging portions 241a. The screw hole 241c is used to attach a support (not illustrated) that supports the television device 1 when the television device 1 is assembled at a factory. The upper surface 241d is disposed on the upper-side (Z1 direction-side) surface of the stand attachment portion 241.

Moreover, in the present preferred embodiment, as is shown in FIG. 5, a respective one of the speaker attachment portions 242 and 243 is disposed on the outside of the speaker/stand attachment member 24 in the left-right direction (X direction). That is, the speaker attachment portions 242 and 243 are disposed so as to sandwich the stand attachment portion 241. In addition, the speaker attachment portion 242 (243) is configured such that a speaker 27 (28) is attached so as to output sound in a vertically downward direction (Z2 direction). Furthermore, the speaker attachment portion 242 (243) includes two boss portions 242a (243a) and a plurality of sound holes 242b (243b).

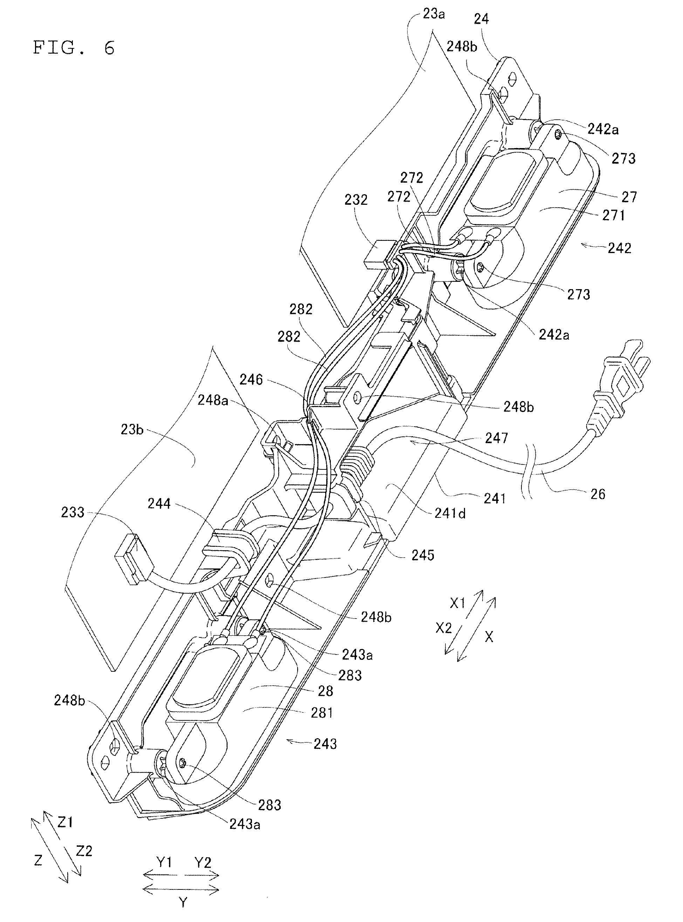

The two boss portions 242a (243a) are disposed at an interval in the left-right direction (X direction). Moreover, the boss portions 242a (243a) protrude rearward (toward the Y2 direction) from the front-side (Y1 direction-side) surface of the speaker/stand attachment member 24. In addition, the boss portions 242a (243a) preferably have a cross shape as seen from the Y direction. Furthermore, the boss portions 242a (243a) are configured so as to be fitted into attachment holes 273 (283) (described later) of the speaker 27 (28) (see FIG. 6). The plurality of sound holes 242b (243b) are disposed so as to face the speaker 27 (28) in the vertically downward direction (Z2 direction) in which sound of the speaker 27 (28) is output. The plurality of sound holes 242b (243b) are arranged so as to pass through the lower-side (Z2 direction-side) surface of the speaker/stand attachment member 24 in the up-down direction (Z direction). Moreover, the plurality of sound holes 242b (243b) respectively extend in the left-right direction (X direction) (in the direction of length of the speaker 27 (28)). In addition, the plurality of sound holes 242b (243b) preferably have, as an overall shape, an oval shape that extends in the left-right direction (X direction) corresponding to the shape (oval shape) of the speaker 27 (28). Thus, as a result of the plurality of sound holes 242b (243b) being arranged so as to extend in the long-side direction (X direction) of the speaker 27 (28), the total area of the plurality of sound holes 242b (243b) can be increased compared to a case in which the sound holes 242b (243b) are arranged so as to extend in the short-side direction (Y direction) of the oval-shaped speaker 27 (28). Therefore, it is possible to efficiently output the sound emitted from the speaker 27 (28) to the outside.

As is shown in FIG. 6, the power supply cord attachment portion 244 is arranged so as to guide the power supply cord 26 from the power supply cord connection portion 233 of the circuit board 23b through the power supply cord pull-out opening portion 245 to the outside. The power supply cord attachment portion 244 is disposed between the stand attachment portion 241 and the speaker attachment portion 243 that is disposed on the X2 direction side of the speaker/stand attachment member 24. Furthermore, the power supply cord attachment portion 244 preferably is formed in the shape of the letter U as seen from the X direction and configured so as to sandwich and hold the power supply cord 26 in the up-down direction (Z direction).

The power supply cord pull-out opening portion 245 is provided in order to pull out the power supply cord 26 from the interior of the display device main body 2 to the outside. The power supply cord pull-out opening portion 245 is disposed on the upper side (Z1 direction side) of the end of the stand attachment portion 241 on the X2 direction side. Moreover, the power supply cord pull-out opening portion 245 includes a cutout preferably in the shape of the letter U as seen from the X direction and configured so as to sandwich and fix the power supply cord 26 in the up-down direction (Z direction). Note that by attaching the cover member 25 from the rear side (Y2 direction side), the power supply cord 26 is sandwiched by the cover member 25 and the power supply cord pull-out opening portion 245 of the speaker/stand attachment member 24 in the forward-rearward direction (Y direction) as well.

The wiring attachment portion 246 is arranged so as to guide the wiring 282 (described later) of the speaker 28 to the speaker connection portion 232 of the circuit board 23a. In addition, the wiring attachment portion 246 is disposed on the upper side (Z1 direction side) of the speaker/stand attachment member 24 substantially in the center in the left-right direction (X direction). Furthermore, the wiring attachment portion 246 preferably is formed in a hook shape such that the wiring 282 can be attached and bundled.

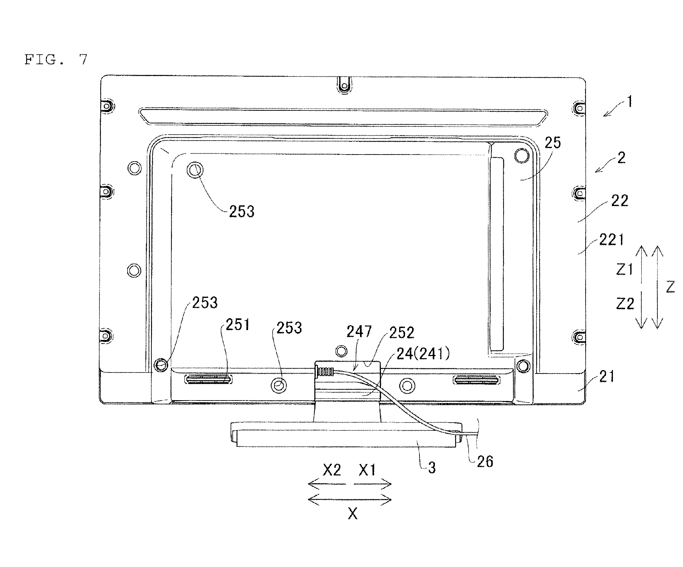

The recessed space 247 is disposed on the upper side (Z1 direction side) of the stand attachment portion 241. Moreover, the recessed space 247 is disposed so as to be exposed to the outside even when the cover member 25 is attached as shown in FIG. 7. In addition, the recessed space 247 is configured such that the power supply cord 26 that is pulled out of the power supply cord pull-out opening portion 245 can pass as shown in FIG. 6. Furthermore, the lower-side (Z2 direction-side) surface of the recessed space 247 is arranged so as to be inclined upward (Z1 direction) at a specified angle from the rear side (Y2 direction side) toward the front side (Y1 direction side). That is, the recessed space 247 is arranged such that the width in the up-down direction (Z direction) becomes narrower from the rear side (Y2 direction side), which is exposed to the outside, toward the front side (Y1 direction side). Because of this, the upper surface 241d of the stand attachment portion 241 facing the recessed space 247 has a shape that is gradually inclined upward toward the back of the recessed space 247 (toward the Y1 direction), so it is possible to increase the length in the Z direction of the stand attachment portion 241 disposed on the lower side (Z2 direction side) of the recessed space 247. Consequently, the hole depth of the screw holes 241b used to attach the stand member 3 can be increased. As a result, the stand member 3 can be fixed in a more stable manner. Moreover, as a result of the width of the recessed space 247 in the up-down direction (Z direction) gradually being narrowed toward the back of the recessed space 247, the speaker/stand attachment member 24 preferably has a shape that makes processing easier at the time of surface texturing.

The cover member 25 is disposed on the rear side (Y2 direction side) of the display panel 22 and fixed to the rear frame 221 of the display panel 22 and the front cabinet 21 as shown in FIG. 2. In addition, the cover member 25 is arranged such that the upper side (Z1 direction side), the left and right (X direction), and the rear side (Y2 direction side) of the circuit boards 23a and 23b attached to the display panel 22 are not exposed to the outside as shown in FIG. 3. That is, the cover member 25 is configured so as to cover the circuit boards 23a and 23b attached to the display panel 22 along with the speaker/stand attachment member 24. Furthermore, the cover member 25 is arranged so as to cover a portion on the rear side (Y2 direction side) of the rear frame 221 of the display panel 22 as shown in FIG. 7. Moreover, the cover member 25 includes sound escape holes 251, a cutout portion 252, and screw insertion holes 253. In addition, the cover member 25 is attached by the screws 254 that are inserted into the screw holes 221a through 221c of the rear frame 221 and the screw holes 211 of the front cabinet 21 via the screw insertion holes 253.

The sound escape holes 251 in the cover member 25 are respectively disposed on the rear side (Y2 direction side) of the speakers 27 and 28 so as to face the speakers 27 and 28 as shown in FIG. 3. Furthermore, each of the sound escape holes 251 preferably has a rectangular or substantially rectangular shape that extends in the left-right direction (X direction) so as to correspond to the shape of the speaker 27 (28). Consequently, the sound that is output to the rear side (Y2 direction side) of the speakers 27 and 28 can be released to the outside without being kept in the interior of the display device main body 2.

The cutout portion 252 is disposed on the lower side (Z2 direction side) of the cover member 25 substantially in the center in the left-right direction (X direction) as shown in FIG. 3. Moreover, the cutout portion 252 is disposed at a location corresponding to the recessed space 247 of the speaker/stand attachment member 24.

The power supply cord 26 is configured such that power from the outside can be supplied to the display device main body 2. Furthermore, the power supply cord 26 is connected to the power supply cord connection portion 233 of the circuit board 23b as shown in FIG. 6. Moreover, the power supply cord 26 is attached to the power supply cord attachment portion 244 of the speaker/stand attachment member 24. In addition, the power supply cord 26 is easily pulled out to the outside through the power supply cord pull-out opening portion 245 and recessed space 247 of the speaker/stand attachment member 24.

The speakers 27 and 28 are configured so as to output sound. Moreover, the speaker 27 (28) is attached to the speaker attachment portion 242 (243) of the speaker/stand attachment member 24 so as to output sound preferably in the vertically downward direction (Z2 direction). In addition, the speaker 27 (28) includes a speaker main body 271 (281), wiring 272 (282), and attachment holes 273 (283). The speaker main body 271 (281) is configured so as to be attached in a tightly fixed manner to the surface of the speaker attachment portion 242 (243) including the sound holes 242b (243b) formed therein in a state in which the attachment holes 273 (283) in the speaker 27 (28) are fitted over the boss portions 242a (243a) of the speaker attachment portion 242 (243). Consequently, the sound emitted from the speaker 27 (28) can be output efficiently to the outside without being kept in the interior of the display device main body 2.

The wiring 272 (282) connects the speaker main body 271 (281) and the speaker connection portion 232 of the circuit board 23a. The wiring 282 of the speaker 28 is connected from the speaker main body 281 to the speaker connection portion 232 via the wiring attachment portion 246 of the speaker/stand attachment member 24. Consequently, the wiring 282 can be connected easily to the speaker connection portion 232 in the interior of the display device main body 2 by avoiding the recessed space 247 of the speaker/stand attachment member 24.

The stand member 3 is configured so as to support the display device main body 2. Furthermore, the stand member 3 includes the protruding hook portions 31 and screw insertion holes 32 as shown in FIG. 3. Moreover, the stand member 3 is configured so as to be disposed on the lower side (Z2 direction side) of the speaker/stand attachment member 24 and attached to the stand attachment portion 241 of the speaker/stand attachment member 24. As is shown in FIG. 9, the protruding hook portions 31 are disposed in positions corresponding to the two hook engaging portions 241a of the stand attachment portion 241 and engage with the hook engaging portions 241a. In addition, the stand member 3 is attached by screws 33 that are into the screw holes 241b in the stand attachment portion 241 via the screw insertion holes 32.

In the present preferred embodiment, as was described above, by providing the speaker/stand attachment member 24 which is provided on the display device main body 2 and in which the speaker attachment portion 242 (243) that attaches the speaker 27 (28) and the stand attachment portion 241 that attaches the stand member 3 are integral with each other, it is possible to configure a member that attaches the stand member 3 and a member that attaches the speaker 27 (28) with the single speaker/stand attachment member 24, thus making it possible to decrease and prevent an increase in the number of parts for a member that attaches the stand member 3 and the speaker 27 (28).

Furthermore, in the present preferred embodiment, the speaker attachment portion 242 that attaches the speaker 27 and the speaker attachment portion 243 that attaches the speaker 28 are provided on the speaker/stand attachment member 24, and the speaker attachment portion 242 and the speaker attachment portion 243 are preferably integral with the stand attachment portion 241 and configured to sandwich the stand attachment portion 241, such that the speaker/stand attachment member 24 can be formed to be longer than the case of forming the stand attachment portion 241 as a single body by the length corresponding to the speaker attachment portion 242 and the speaker attachment portion 243 that are disposed so as to sandwich the stand attachment portion 241. Therefore, it is possible to prevent the speaker/stand attachment member 24 being twisted. Consequently, the display device main body 2 can be stably supported by the stand member 3 attached to the speaker/stand attachment member 24. Moreover, the speaker/stand attachment member 24 can be positioned with respect to the display device main body 2 in the periphery of the speaker attachment portion 242 and in the periphery of the speaker attachment portion 243 that are disposed so as to sandwich the stand attachment portion 241, thus making the positioning possible at locations spaced far away from the stand attachment portion 241. This makes it possible to easily reduce errors in the inclination of the stand attachment portion 241 with respect to the display device main body 2 compared to the case of positioning in the periphery of the stand attachment portion 241.

In addition, in the present preferred embodiment, as a result of the power supply cord attachment portion 244 that attaches the power supply cord 26 being integrally provided on the speaker/stand attachment member 24, it is not necessary to separately provide a member to attach the power supply cord 26, so the number of parts can be reduced accordingly.

Furthermore, in the present preferred embodiment, the speaker/stand attachment member 24 is provided with the power supply cord pull-out opening portion 245 to enable pulling out the power supply cord 26 to the outside, so the power supply cord 26 can be pulled out easily to the outside from the vicinity of the power supply cord attachment portion 244 of the speaker/stand attachment member 24 to which the power supply cord 26 is attached.

Moreover, in the present preferred embodiment, the display device is provided with the circuit board 23a attached to the rear (Y2 direction-side) surface of the display panel 22, and the wiring attachment portion 246 that attaches the wiring 282 that connects the circuit board 23a and the speaker 28 preferably is provided as an integral unit on the speaker/stand attachment member 24, so there is no need to separately provide a member that attaches the wiring to connect the circuit board 23a and the speaker 28, thus making it possible to reduce the number of parts accordingly.

In addition, in the present preferred embodiment, the display device is provided with the circuit boards 23a and 23b attached to the rear (Y2 direction-side) surface of the display panel 22 and the cover member 25 that covers the circuit boards 23a and 23b attached to the rear (Y2 direction-side) surface of the display panel 22, and the speaker/stand attachment member 24 is disposed so as to configure a portion of the cover member 25, whereby the speaker 27 (28) can be covered by the cover member 25 that covers the circuit boards 23a and 23b attached to the rear (Y2 direction-side) surface of the display panel 22, thus eliminating the need to separately provide a member that covers the speaker 27 (28). The number of parts can be reduced by this as well. Furthermore, the speaker 27 (28) and the circuit board 23a can be connected easily on the inside of the cover member 25.

Moreover, in the present preferred embodiment, by fixing the speaker/stand attachment member 24 to the rear frame 221 made of metal that is disposed on the rear (Y2 direction-side) surface of the display panel 22, the stand member 3 can be attached to the speaker/stand attachment member 24 that is fixed to the rear frame 221 made of metal, which has a high mechanical strength, so the display device main body 2 can be supported by the stand member 3 in a more stable manner.

In addition, in the present preferred embodiment, as a result of the speaker attachment portion 242 (243) of the speaker/stand attachment member 24 being provided with the plurality of sound holes 242b (243b) that output sound from the speaker 27 (28) in the vertically downward direction (Z2 direction), the speaker 27 (28) can be attached so as to be oriented in the vertically downward direction (Z2 direction), so it is possible to reduce the thickness of the television device 1 in the forward-rearward direction (Y direction).

Furthermore, in the present preferred embodiment, the speaker/stand attachment member 24 is preferably configured such that the speaker attachment portion 242 (243) and the stand attachment portion 241 are integrally formed preferably by resin molding, for example, so as to form a unitary monolithic member, thus making weight reduction possible compared to the case of forming the speaker/stand attachment member 24 from metal. Moreover, because the speaker/stand attachment member 24 is electrically insulated by resin, elements that need to be insulated, such as a main power supply switch, can be easily attached to the speaker/stand attachment member 24.

Note that the preferred embodiment described above merely constitutes an example in all respects and should be considered to be non-restrictive.

For example, in the aforementioned preferred embodiment, an example was shown in which a television device is preferably applied as one example of a display device of the present invention, but the present invention is not limited to this. The present invention can also be applied to display devices other than television devices. For instance, the present invention can also be applied to displays or the like for use with personal computers.

In addition, in the aforementioned preferred embodiment, an example was shown in which two speakers are preferably provided on the display device main body, but the present invention is not limited to this. With the present invention, a configuration is also possible in which one or three or more speakers are provided on the display device main body. In this case, the number of speaker attachment portions corresponding to the number of the speakers is integrally provided on the speaker/stand attachment member (attachment member) as well.

Furthermore, in the aforementioned preferred embodiment, an example was shown in which the speaker/stand attachment member according to a preferred embodiment of the present invention preferably includes a structure in which the cover member partially covers the rear frame of the display panel, but the present invention is not limited to this. In the present invention, the speaker/stand attachment member (attachment member) of the present invention can also be applied to a structure including a conventional rear cabinet that covers the entire rear frame instead of the cover member.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A display device comprising:
a display device main body that includes a display panel;
a stand member that supports the display device main body;
at least one speaker provided on the display device main body; and
an attachment member that is provided on the display device main body and in which a speaker attachment portion that attaches the at least one speaker and a stand attachment portion that attaches the stand member are integral with each other.

2. The display device according to claim 1, wherein the at least one speaker includes a first speaker and a second speaker, the speaker attachment portion of the attachment member includes a first speaker attachment portion that attaches the first speaker and a second speaker attachment portion that attaches the second speaker, and the first speaker attachment portion and the second speaker attachment portion are integral with the stand attachment portion so as to sandwich the stand attachment portion.

3. The display device according to claim 1, wherein the attachment member is integral with a power supply cord attachment portion that attaches the power supply cord.

4. The display device according to claim 3, wherein the attachment member is provided with a power supply cord pull-out opening portion that enables pulling out of the power supply cord to outside.

5. The display device according to claim 1, further comprising a circuit board attached to a rear surface of the display panel, and the attachment member is also integral with a wiring attachment portion that attaches wiring to connect the circuit board and the speaker.

6. The display device according to claims 1, further comprising a circuit board attached to the rear surface of the display panel and a cover member that covers the circuit board attached to the rear surface of the display panel, wherein the attachment member defines a portion of the cover member.

7. The display device according to claim 1, wherein the attachment member is fixed to a member made of metal that is disposed on the rear surface of the display panel.

8. The display device according to claim 1, wherein the speaker attachment portion of the attachment member includes a plurality of sound holes that output sound from the speaker in a vertically downward direction.

9. The display device according to claim 1, wherein the attachment member is configured such that at least the speaker attachment portion and the stand attachment portion are made of resin molded material and define a monolithic unitary member.

10. A television device comprising:
a receiver that receives a television broadcast;
a display device main body including a display panel that displays a television broadcast;
a stand member that supports the display device main body;
at least one speaker provided on the display device main body; and
an attachment member which is provided on the display device main body and in which a speaker attachment portion that attaches the at least one speaker and a stand attachment portion that attaches the stand member are integral with each other.
